# EUROPEAN PATENT APPLICATION

(11) **EP 1 993 295 A1**
(43) Date of publication of application: **19.11.2008**
(21) Application number: 07113494.4
(22) Date of filing: 31.07.2007
(51) Int. Cl.: H04Q 1/14

(54) **Telecommunication assembly with an inner frame and an outer frame**

(30) Priority: 14.05.2007 US 917834 P
(71) Applicant: 3M Innovative Properties Company, St. Paul MN 55144-1000 (US)
(72) Inventor: Schlueter, Dietrich, 46284 Dorsten (DE); Bund, Christine, 42111 Wuppertal (DE)
(74) Representative: Bergen, Katja

(57) **Abstract**

Telecommunication assembly 1 comprising termination modules 21 having electrical contacts for connecting wires, an outer frame 2 and at least one inner frame 4 for carrying a predetermined number of termination modules 21, the inner frame 4 is detachably fixed at the outer frame 2 wherein thin inner and the outer frame enclose a space.

## Description

The invention relates to a telecommunication assembly for termination modules having electrical contacts for connecting wires with an inner frame and an outer frame.

In the field of telecommunication, numerous customers are connected with the switch of a telecommunication company via telecommunication lines. The customers can also be called subscribers. The switch is also called an exchange. Between the subscriber and the switch, sections of the telecommunication lines are connected with telecommunication modules. The telecommunication modules establish an electrical connection between a wire which is attached to the telecommunication module at a first side, and another wire which is attached to the telecommunication module at a second side. Plural telecommunication modules can be put together at a distribution point, such as a main distribution frame, an intermediate distribution frame, an outside cabinet or a distribution point located, for example in an office building or a particular floor of an office building. To allow flexible wiring, some telecommunication lines are connected with first telecommunication modules in a manner to constitute a permanent connection. Flexibility is realized by so called jumpers, which flexibly connect contacts of the first telecommunication module with contacts of a second telecommunication module. These jumpers can be changed when a person moves within an office building or with his home to provide a different telephone (i.e. a different telephone line) with a certain telephone number, which the relocated person intends to keep.

Recently, ADSL-technology has spread widely in the field of telecommunication. This technology allows at least two different signals to be transmitted on a single line. This is achieved by transmitting the different signals at different frequencies along the same line. The signals are combined at a particular point in the telecommunication line and split at another point. In particular, at the subscriber side, voice and data signals, which are separate, are combined and sent to the central office via the same line. In the central office the combined signal is split. For the transmission of voice and data signals to the subscriber, separate voice and data signals are combined at the central office, sent to the subscriber and split at the subscriber side. After splitting the signal, the so-called POTS-signal (plain old telephone service) can be used to transmit voice signals. The remaining part of the split signal can be used to transmit data, for example. So-called splitters, which are used to split or combine the signal, can generally be arranged at any distribution point. In this context, a POTS wire or POTS jumper indicates a wire, which is connected with an exchange of the telecommunication company. Furthermore, a line connection indicates a wire, which leads to the subscriber or customer. Finally, as discussed in more detail below, a DSLAM-wire means a wire which is connected with a DSLAM and thus, can, for example, transmit data. A DSLAM (Digital Subscriber Line Access Multiplexer) processes the data signal.

DE 102 36 361 B4 discloses a telecommunication module for use within an assembly for establishing an electrical connection between a wire that is attached to the first side of the module and a wire that is attached to the other side of the module. The module comprises a housing with openings on both sides for rows of contacts. The housing may be fixed on two round mounting rails. Several housings may be attached on top of each other at the mounting rails.

EP 0 901 294 A2 discloses a telecommunication module with a frame for a plurality of connectors with several contacts. Every connector is attached separately to the frame. Between two connectors a partition member is arranged.

EP 0 486 331 A2 discloses a telecommunication module with an U-shaped frame for connecting single modules thereto. The modules comprise electrical contacts and electronic components such as electronic printed circuit boards. The modules are connected to a first connector assembly within the frame. The first connectors are arranged in the middle of the U-shaped frame. A second connector assembly is arranged at the rear side of the U-shaped frame. There is a space between the two connector assemblies. The first and second connector assemblies are connected by wires.

EP 1 455 419 A1 discloses a telecommunication module with a carrier comprising two side walls and a mounting means in order to allow the carrier to be mounted to a suitable equipment. The telecommunication module is provided with several connectors at the top, the bottom and/or the side for establishing an electrical connection.

US 2006/0 264 117 A1 discloses a telecommunication assembly for mounting an insulation displacement connector block with an outer frame and at least one sub frame for carrying a connector block wherein the sub frame is detachably fixed at the outer frame.

There is a need for a telecommunication assembly with termination modules having electrical contacts for connecting wires that has different mounting levels. At the same time there is a need for such a telecommunication assembly providing an easy exchange of parts, for example, which need to be replaced, repaired or adapted to certain changing requirements. It would also be an advantage to get a telecommunication assembly with termination modules having electrical contacts for connecting wires with a modular structure where the size of one module corresponds to standards of electronic components. There is also a need for a space saving telecommunication assembly with termination modules having electrical contacts that is at the same time easy to manufacture. It would also be an advantage to have a telecommunication assembly that provides a high flexibility in arranging cables and/or wires and offers the possibility to clearly arrange cables and/or wires and to get a clearly defined cable management. This would make handling for an installer much easier and would help to present a cost-effective solution.

The present invention provides a telecommunication assembly comprising termination modules having electrical contacts for connecting wires, an outer frame and at least one inner frame for carrying a predetermined number of termination modules, the inner frame is detachably fixed at the outer frame wherein the inner and the outer frame enclose a space. The telecommunication assembly according to the invention has two back mount frames, a first outer frame and a second inner frame. The inner frame carries a predetermined number of termination modules. The inner frame is detachably fixed at the outer frame. By providing a space between the inner and the outer frame an additional level is provided that can be used, for example, for guiding wires and/or cables there through. That also helps to achieve a clearly structured assembly. Such a structure helps to make handling for an installer much easier.

The concept of having an inner and an outer frame helps to provide different modular mounting levels, e.g. one level could be the space. To have a modular system helps to mount the assembly step by step according to the actual requirements.

The telecommunication assembly described herein comprises contacts which are adapted to connect wires therewith. A contact generally means any component which is adapted to establish electrical connection with at least one wire. For this purpose the contact can, for example, at a first end thereof, be formed as an insulation displacement contact (IDC), a wire wrap contact or in any other suitable manner. Thus, a wire can be connected at the first end of the contact, and at a second end of the contact, an electrical connection with a further component can be established. The second end of the contact can, for example, be formed as a tab, which is in electrical connection with the tab of an opposing contact which is, at the first end thereof, substantially formed as the above described first contact. In this case, the tabs, which are in contact with each other, form a disconnection point. At this point an outside contact of a telecommunication component, such as a protection plug or magazine, a test plug or a splitter module can be established. The signal which is transmitted from the wire to the contact is further transmitted to the telecommunication component (for example the splitter module) and can be processed by this module. In such an application all of the current is re-routed through the telecommunication component. However, if the outside component is for example a testing device, an electrical connection forming a branch to the testing device can be established at the disconnection point. In particular, contacts of a row of POTS-contacts, on the one hand, can be provided with such a disconnection point. In this manner, a so-called lifeline service can be provided by connecting the mentioned contacts with each other (without splitting a DSLAM), and thus provide POTS service alone.

In the last described embodiment, the telecommunication module is particularly suitable for being combined with at least one splitter circuit. As will be apparent to those skilled in the art, splitter circuits comprise suitable filters, such as low pass and high pass filters, to split the combined signal as described above. But a reference to a "splitter" may also be understood in appropriate circumstances to be a reference to what could be called a "combiner". The splitter circuit as described above comprise an electrical circuit which splits or combines a signal.

The predetermined number of termination modules in the inner frame may be of the kind that the number of the contacts of all termination modules together corresponds to a standard number for contacts for electronic components such as for example to the number of contacts or channels of one DSLAM printed circuit board. That is advantageous because the contacts of the inner module may be grouped and connected with the electronic component by using only one cable. By using an inner and an outer frame that are detachably fixed at each other a modular system is provided that can easily be structured, exchanged and/or adapted to changing requirements. In other words it provides a simple solution for arranging and exchanging single parts of the assembly.

The inner frame could be fixed at the outer frame. It is also possible to fix the inner frame at any kind of mounting means for the telecommunication assembly.

According to another embodiment of the invention the inner frame may be U-shaped. It typically comprises a base portion and two legs extending at both ends of the base. Such a frame is easy to manufacture and therefore low priced. The outer frame may be a U-shaped frame with a base portion and two legs extending at both ends of the base as well. Any other shape for the frames is possible as well such as for example a L-shape, a H-, F- or a C-shape, an A-shape, two L-shaped frames, a box with one open side or only a base portion. The inner and the outer frame may be made out of metal. U-shaped frame parts out of metal are easy to manufacture e.g. by bending and therefore cost-effective in the production. They are as well stable enough for the described use. The frames may of course be manufactured out of other materials such as for example plastics and/or aluminium, magnesium, zinc, etc.. In this case they could easily be manufactured by injection moulding. If plastics are used extrusion is another possibility of production. If metals are used the frame may be profiles swelled or screwed together or die cast parts. It is also possible to use profiles with several chambers and/or ribs. The chambers an ribs may help to better organize the cables and/or wires.

The inner frame may comprise fixing and/or centring elements for fixing and/or centring the inner frame to the outer frame. Integrating the fixing and/or centring elements into the inner frame provides the advantage that no further fixing and/or centring elements are necessary while assembling the telecommunication assembly. That also provides an advantage with respect to the costs of the assembly. The fixing elements may be designed as a snap fit. For example a nose may be formed into the inner frame that engages with a recess and/or an opening of the outer frame. All other known fixing elements such as bolts, screws, brackets may be used as well. The centring elements may be designed in the shape of protrusions formed into the inner frame that engages with a recess and/or opening of the outer frame. When the inner and the outer frame consist of metal the fixing and/or centring elements could easily be formed into the frames for example by stamping. When the inner and the outer frame consists of plastics the fixing and/or centring elements could easily be formed by moulding.

The inner frame may carry at least one wire guide housing. The wire guide housings may be fixed to the termination modules of the telecommunication assembly. When the wire guide housings are fixed to the inner frame they may be connected to the inner frame even when the termination module is being pulled out of the telecommunication assembly, for example, while being replaced. This provides the advantage that the wires can stay in the wire guide housing and keep their correlation to the contacts of the termination module they belong to even if the connection of the wires to the contacts is temporarily interrupted.

The inner frame may comprise at least one telecommunication component such as electronic components as printed circuit boards for splitter modules and the like or intelligent devices, protection components such as over-voltage and/or overcurrent protectors. The telecommunication component may be attached to the termination module and/or the inner frame.

The inner frame may also comprise at least one aperture allowing electrical contact from outside the frame to the telecommunication components of the inner frame. The electrical contact to the telecommunication components of the inner frame may be achieved by at least one plug. Therefore, the inner frame may comprise a connector assembly inside of the aperture. The connector assembly may be adapted to connectors of the telecommunication components as well as to the connector field of the plug. Instead or in addition to the plug the electrical contact may be achieved by at least one bus assembly. The connector assembly may also be part of the telecommunication component and or the termination module.

The plug may be arranged in the space between the inner and the outer frame. By arranging the plug in this space the additional level of the telecommunication assembly is used for guiding cables there through. This helps to clearly arrange the cables within the assembly and to get a clearly structured assembly.

According to a further embodiment of the invention the inner frame may comprise at least one wire guide element for guiding wires from outside the inner frame to the contacts of the termination module of the inner frame. The wire guide element may be fixed at the inner frame. It may be integral with the inner frame or detachable mounted at the inner frame. It is also possible to attach the wire guide element to the termination modules or to the telecommunication components.

According to a further embodiment of the invention the inner frame typically comprises receptacles for receiving fixing elements of the termination module. When the termination modules comprise snap fits the receptacles may be in the shape of an opening or a cavity in the inner frame. When the termination modules are fixed by screws the receptacles may be in the shape of a threaded bore. So any kind of common fixing means may be used such as a latch or plug-in system with for example dovetails or the like.

The inner frame generally comprises openings for receiving fixing and/or guiding elements of the telecommunication components. These openings may also be in the shape of openings, cavities, slots, bores, rails or the like depending on the kind of fixing element the telecommunication components comprise. When the telecommunication components are fixed to a connector assembly at the inner frame it may be necessary to guide the telecommunication components so that a correct mating is achieved and thereby the danger of destroying parts of the connector assembly such for example pins or the like is minimized.

According to yet another embodiment of the invention the outer frame may comprise openings for accommodating fixing elements and/or guide rails for accommodating guiding elements of the inner frame. A very easy way to fix the inner frame to the outer frame is a snap fit. A snap fit may, for example, be achieved by providing a nose in one of the frames and a corresponding reception in the other frame. There may be guiding elements to guide the inner frame into the right position relative to the outer frame to provide easier handling. If the inner and the outer frame are arranged with a gap between each other the guiding elements may also function as a stop mechanism, for example, a dead stop.

The outer frame may be mounted to mounting rails. Any other mounting structure may be used such as for example racks, profiles as well as ribs in housings.

Generally, the telecommunication module described herein can be used by itself, i.e., a distribution point can be equipped with this telecommunication module step by step in order to prepare to provide ADSL service to a growing number of subscribers.

The invention will now be described in more detail with reference to the following Figures exemplifying particular embodiments of the invention:
- Fig. 1: a perspective view of a telecommunication assembly according to the invention with an outer frame and an inner frame;
- Fig. 2: a perspective view of the inner frame of the telecommunication assembly shown in Fig. 1 with a plug at the rear side;
- Fig. 3: a perspective view of the inner frame of the telecommunication assembly shown in Fig. 1 without a plug at the rear side;
- Fig. 4: a perspective view on top of the telecommunication assembly shown in Fig. 1 showing the different levels of the assembly;
- Fig. 5: a perspective view of the plug shown in Fig. 1 and 3 from the rear side;
- Fig. 6: a perspective view of the plug shown in fig. 1 and 3 from the top side and
- Fig. 7: a perspective view of another embodiment of a telecommunication assembly according to the invention with an outer frame and an inner frame.

Herein below various embodiments of the present invention are described and shown in the drawings wherein like elements are provided with the same reference numbers.

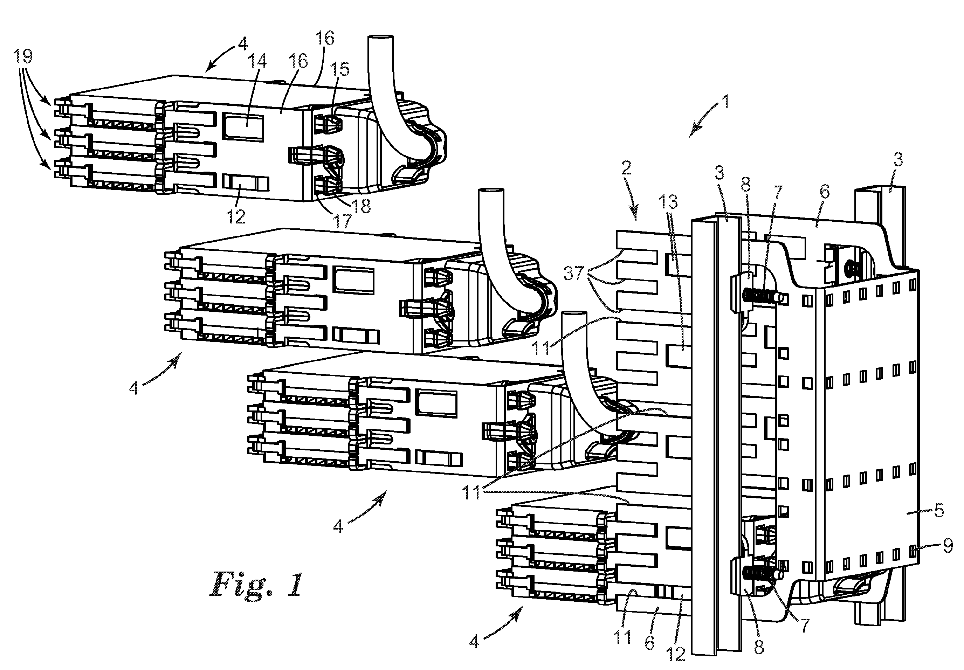

Fig. 1 shows a telecommunication assembly 1 comprising an outer frame 2 mounted at two mounting rails 3 and several inner frames 4. The smaller inner frames 4 are arranged as modules inside the outer frame 2. The outer frame 2 is U-shaped and comprises a base part 5 and two legs 6. It is mounted by screws 7 and fixing elements 8 to the mounting rails 3. The base part 5 comprises openings 9 that are arranged in rows. Cable ties (not shown) could be fixed thereon. The two legs 6 comprise guiding rails 11 for receiving guiding elements 12 of the inner frames 4. The guiding elements 12 will be described in detail below. The two legs 6 also comprise openings 13 for receiving fixing elements 14 of the inner frames 4. The fixing elements 14 of the inner frames 4 will be described in detail below. The outer frame 2 is made out of metal.

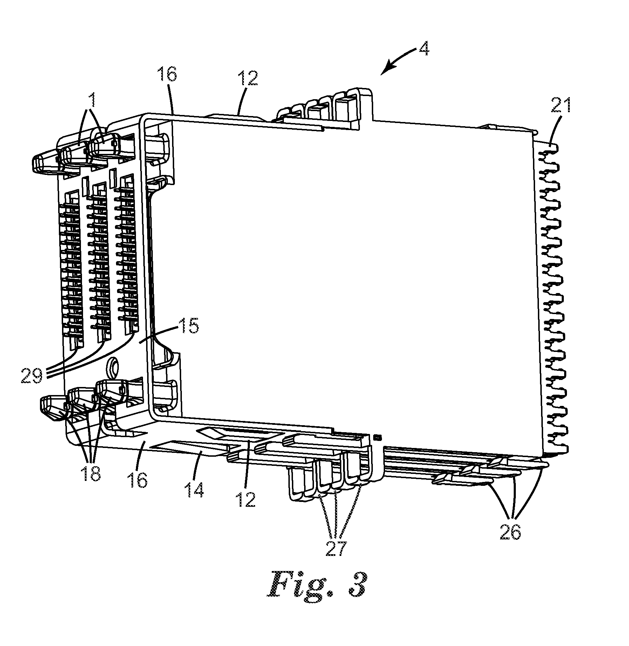

The inner frames 4 are also made out of similar metal. They are U-shaped as well and provide a base part 15 and two legs 16. The base part 15 of the inner frame comprises openings 17 for guiding elements 18 of telecommunication components 24 that will be described in detail below. The two legs 16 comprise guiding elements 12 and fixing elements 14. The fixing elements 14 are rectangular tabs provided by cutting-out or stamping from the metal material of the inner frame. They are cut out at three sides and connected at one side to the leg 16 and bend in the direction outside of the inner frames 4. The fixing elements 14 can best be seen in Fig. 3 where they protrude over the leg 16 of the inner frame 4. By protruding over the leg 16 they engaging with the opening 13 of the outer frame 2. The guiding elements 12 are rectangular tabs provided by cutting-out or stamping from the metal material of the inner frame. They are cut out at only two sides and connected at two sides to the leg 16. The guiding elements 12 can best be seen in Fig. 3 where they protrude over the leg 16 of the inner frame 4 as well. By protruding over the leg 16 they interact with the guiding rails 11 of the outer frame.

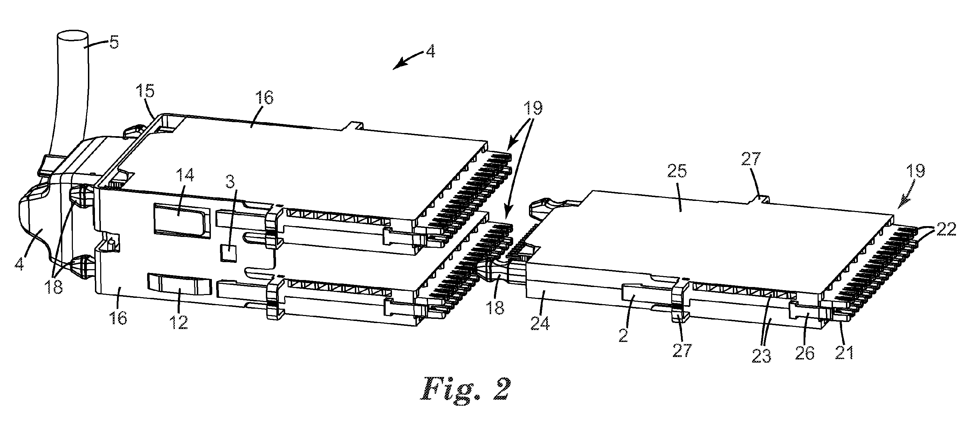

The inner frames 4 comprise three modules 19 that can be seen best in Fig. 2 and will now be described with reference to that Figure. Fig. 2 shows one inner frame 4 with a base part 15 and two legs 16. The legs 16 comprise the described fixing elements 14 and guiding elements 12. Inside of the U-shaped inner frame 4 three modules 19 are arranged. In Fig. 2 one of the modules 19 is pulled out of the inner frame 4. The modules 19 each comprise a housing 25, a termination module 21 with two rows 22 of electrical contacts on the front side, wire guide housings 23 on a top and bottom portion of the module 19 and telecommunication components 24 such as for example splitter units. In the embodiment shown in Fig. 2, it can not be seen that the described parts (termination module 21, wire guide housings 23 and telecommunication component 24) are separate parts since the module 19 comprises the housing 25 containing at least the telecommunication component 24, the wire guide housings 23 and the termination module 21. The termination module 21 is detachably fixed to the front side of the housing 25 by two fixing legs 26, one on each transverse side of the termination module 21 (only one can be seen in Fig. 2). The fixing legs 26 act as snap fits fixing the termination module 21 temporarily to the housing 25. The housing 25 also comprises wire guide rings 27 (only one can be seen in Fig. 2) on each transverse side for guiding wires and/or cables from outside the inner frame 4 to the wire guide housings 23 of the inner frame 4. The housing 25 further comprises guiding elements or pins 18 pointing in the direction of the base part 15 of the inner frame 4 and interacting with the openings 17 (see Fig. 1) in the base part 15 of the inner frame 4. At the rear side of the housing 25 between the two guiding elements 18 can also be seen contacts of the telecommunication component 24 in the shape of pins 28 also pointing in the direction of the base part 15 of the inner frame 4. The pins 28 extend through further openings 29 in the base part 15 of the inner frame 4 (see Fig. 3). To prevent that the pins 28 will be destroyed, e.g. deformed, while the modules 19 are inserted into the inner frame 4, the guiding elements 18 protrude beyond the pins 28 and therefore the guiding elements 18 interact with the inner frame 4 before the pins 28 contact the mating connector assembly. The guiding elements 18 each have guiding surfaces 31 that interact with the opening 17 thereby forcing the modules 19 in a position where the pins 28 directly meet the opening 29 of the inner frame 4. In one embodiment, the guiding surfaces 31 of guiding elements or pins 28 have a conical taper. The modules 19 also comprise fixing legs 32 for fixing the modules 19 to the inner frame 4. The inner frame 4 comprises openings 33 (one can be seen in Fig. 2) for interacting with the fixing legs 32 to secure the modules to the inner frame.

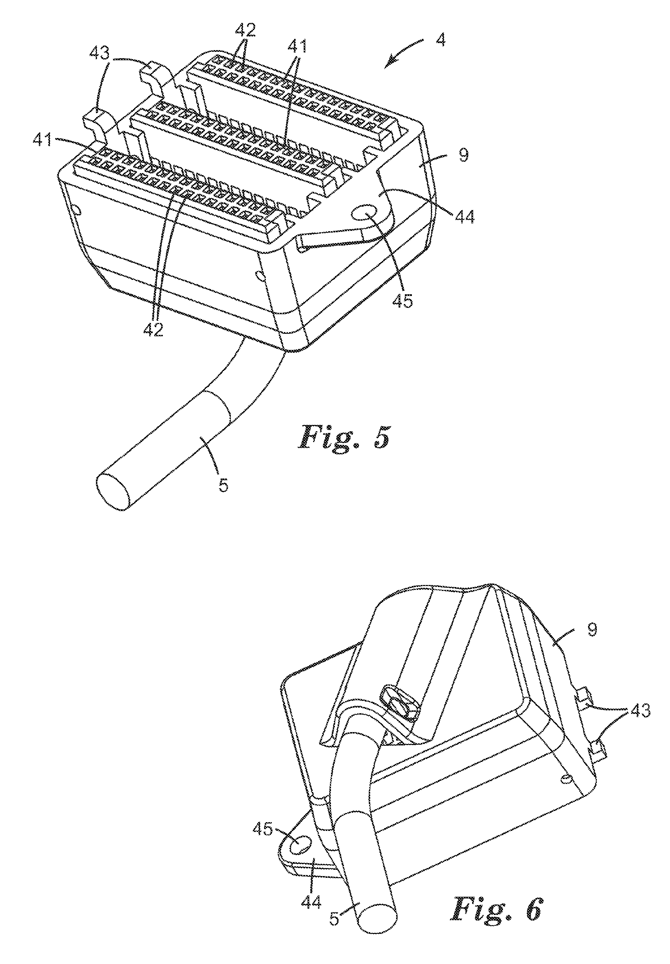

In Fig. 2 a plug 34 for making electrical contact with the pins 28 is shown as well. The plug 34 comprises a housing 39 and a cable 35. Both parts will be described in detail with reference to Fig. 5 and 6.

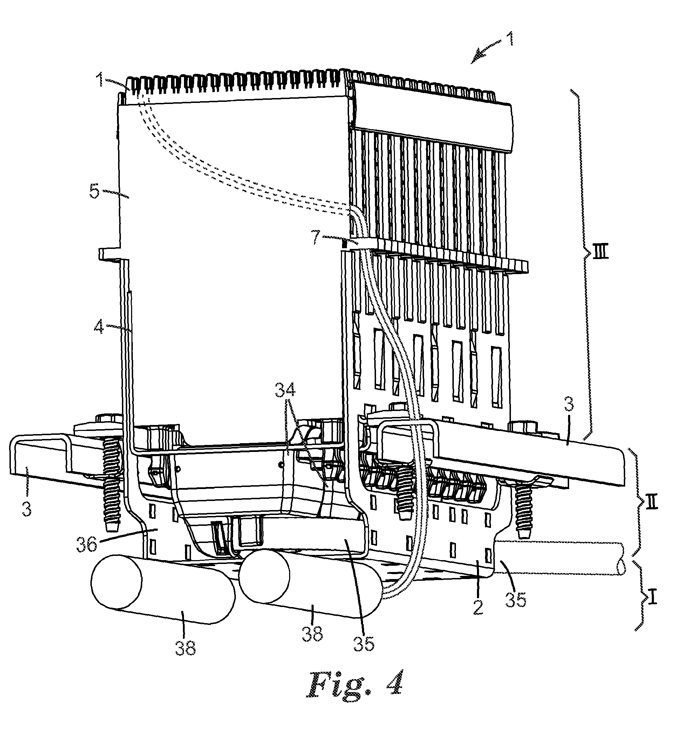

Coming back to Fig. 1, the interaction between the inner frames 4 and the outer frame 2 is shown. When mounting the inner frames 4 to the outer frame 2, the first contact is made between the guiding elements 12 of the inner frame 4 and the guiding rails 11 of the outer frame 2. The guiding elements 12 lead the inner frames 4 along the legs 6 of the outer frame 2 to their end position which is defined by the length of the guiding rails 11. When the guiding elements 12 abut the end of the guiding rails 11 the inner frames 4 have reached their end position. It is also possible to use dead stops to define an end position. In the described embodiment of the invention in this end position, the base parts 15 of the inner frames 4 do not contact the base part 5 of the outer frame 2. Therefore, the inner frames 4 and the outer frame 2 encloses a space 36 (see Fig. 4). For fixing the inner frames 4 to the outer frame 2 the fixing elements 14 interact with the openings 13. This prevents a slipping out of the inner frames 4. For providing a space saving assembly the distance between the legs 6 of the outer frame 2 corresponds to the width of the inner frames 4 without any components mounted there between. The fixing legs 32 on the sides of module 19 encompass leg 16 of the inner frame 4 as well as leg 6 of the outer frame 2. Therefore the outer frame 2 provides receiving portions 37 for receiving the fixing legs 32. One receiving portion 37 is identical with the guiding rail 11 for the guiding element 12 of the inner frame 4.

In the embodiment shown in Fig. 1 at the inner frames 4 contacts for 24 subscribers are arranged, on one termination module are contacts for 8 subscribers. Twenty four is the number of contacts or channels for a standard DSLAM PCB that is usually mounted at another place. Since 24 contacts are grouped together they can easily be connected to the DSLAM PCB via one plug 34 and one cable 35. Because of the modular structure and a lot of detachably fixing elements it is possible to demount any single module, for example, inner frame to exchange a component inside the module.

Fig. 4 shows a perspective view on top of the telecommunication assembly 1 according to the invention showing the different mounting levels (I, II, III) of the assembly. It shows the outer frame 2, two mounting rails 3 and the top inner frame 4 as well as the module housing 25 with the top termination module 21. The embodiment shown in this Figure does provide three different mounting levels (I, II, III) for cables. Such an assembly provides the possibility of easy handling for an installer due to a clearly defined cable management of the different cables and therefore a cost-effective solution for a telecommunication company. A first level I is the space behind the outer frame 2, where main cables or distribution cables 38 are arranged. A second level II is the space 36 between the inner frames 4 and the outer frame 2. This space 36 may be used for other cables such as cables for DSLAM, bus cables and or optical fibre cables. Fig. 4 shows a plug 34 with cables 35 which lead to a remotely located DSLAM PCB. A third level III is on a level with the inner frames 4, where cables can be jumpered e.g. POTS cables, line cables and/or DSLAM cables. Fig. 4 also shows the run of a few wires coming out of the main cable or distribution cable 38 (level I). From this level they are guided along the side of the telecommunication module 1 through the mounting rail 3, through a wire guide ring 27 and into a wire guide housing 23 (level III). Coming out of the wire guide housing 23, the wires are connected to the electrical contacts of the termination module 21. In level II, wires and/or cables for an electrical connection with a DSLAM assembly may be arranged.

For an easy handling and an exact connecting between the contacts of the termination modules 21 inside the inner frames 4, one plug 34 may be used for simultaneously connecting all contacts of the three termination modules 21 inside of one inner frame 4 at a time (see Fig. 5 and 6). Instead of using several plugs one plug 34 is used. By using one plug 34 misalignments can be prevented. The plug 34 may be connected to a cable 35 which leads to any kind of electronic or intelligent device such as for example a DSLAM assembly. The plug 34 comprises a housing 39 containing three single strips 41 with receptacles 42 for the pins 28 of the telecommunication components 24. The receptacles 42 are arranged in two rows at a strip 41 to form a socket. For attaching plug 34 to the inner frame 4, two hooks 43 and a fixing tongue 44 with a bore 45 are provided. Depending on the kind of contacts at the telecommunication component 24, the strips 41 of the plug 34 may comprise sockets (Fig. 5) or card edges (not shown). It is also possible to arrange a PCB inside of the housing 39 of the plug 34. The plug 34 may also be connected to different kinds of cables such as for example to a bus cable and/or to telecommunication cables. In both cases a PCB may be integrated in the housing 39 of the plug 34 whereby the sockets are mounted onto the PCB. The different kinds of cables are terminated in the single strips 41 which are in the mounted stage connected to the telecommunication module 24 inside the inner frame 4.

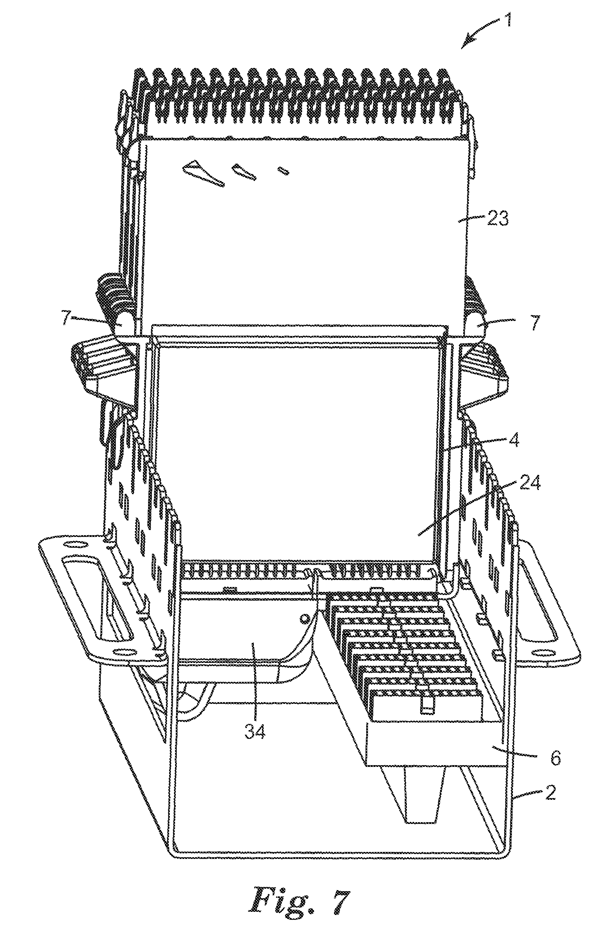

Fig. 7 shows a perspective view of another embodiment of a telecommunication assembly 1 according to the invention with an outer frame 2 and an inner frame 4. The main difference between the embodiment described before and the embodiment shown in Fig. 7 is that another concept of connecting the telecommunication components 24 is shown. Instead of only having one plug 34 connecting all three telecommunication components 24 of one inner frame 4 at a time, there is one plug 34 for example for connecting the telecommunication components 24 to a DSLAM and one common bus 46 for connecting all modules inside of the outer frame. The bus may be used for controlling the telecommunication components 24, for example, for switching them on or off. If a subscriber wants to change his telecommunication service, this could easily be done by switching the service on or off via the bus connection. Another difference between the embodiment of Fig. 7 and the previous embodiment is the fixing concept of the wire guide housings 23. They are fixed on axes 47 and may be swivelled-out from a closed position (see Fig. 7) in an open position (not shown). Another difference between the embodiment of Fig. 7 and the previous embodiment is that the modules 19 are not completely covered from a housing.

### REFERENCE NUMBERS

- 1: telecommunication assembly
- 2: outer frame
- 3: mounting rail
- 4: inner frame
- 5: base part
- 6: leg
- 7: screw
- 8: fixing element
- 9: opening
- 10:
- 11: guiding rail
- 12: guiding element
- 13: opening
- 14: fixing element
- 15: base part
- 16: leg
- 17: opening
- 18: guiding element/pin
- 19: module
- 20:
- 21: termination module
- 22: row of electrical contacts
- 23: wire guide housings
- 24: telecommunication component
- 25: housing
- 26: fixing leg
- 27: wire guide ring
- 28: pins
- 29: openings
- 30:
- 31: guiding surface
- 32: fixing leg
- 33: opening
- 34: plug
- 35: cable
- 36: space
- 37: receiving portions
- 38: main cables/distribution cables
- 39: housing
- 40:
- 41: strip
- 42: receptacles
- 43: hook
- 44: fixing tongue
- 45: bore
- 46: common bus
- 47: axis

- I: first level
- II: second level
- III: third level

## Claims

1. Telecommunication assembly (1) comprising
termination modules (21) having electrical contacts for connecting wires,
an outer frame (2) and
at least one inner frame (4) for carrying a predetermined number of termination modules (21),
the inner frame (4) is detachably fixed at the outer frame (2) wherein
the inner (4) and the outer frame (2) enclose a space (36).

2. The telecommunication assembly according to claim 1, wherein the inner frame (4) is fixed at the outer frame (2).

3. The telecommunication assembly according to claim 1 or 2, wherein the inner frame (4) is U-shaped.

4. The telecommunication assembly according to any of the preceding claims, wherein the outer frame (2) is U-shaped.

5. The telecommunication assembly according to any of the preceding claims, wherein the inner frame (4) comprises fixing (14) and/or guiding (12) elements for fixing and/or guiding the inner frame (4) to the outer frame (2).

6. The telecommunication assembly according to claim 5, wherein the fixing (14) and/or guiding elements (12) are snap fits.

7. The telecommunication assembly according to any of the preceding claims, wherein the inner frame (4) comprises at least one wire guide housing (23).

8. The telecommunication assembly according to any of the preceding claims, wherein the inner frame (4) comprises at least one telecommunication component (24).

9. The telecommunication assembly according to claim 8, wherein the inner frame (4) comprises at least one aperture (29) allowing electrical contact to the telecommunication component (24) of the inner frame (4).

10. The telecommunication assembly according to claim 9, wherein the electrical contact to the telecommunication component (24) of the inner frame (4) is achieved by at least one plug (34).

11. The telecommunication assembly according to claim 10, wherein the plug (34) is arranged in the space between the inner (4) and the outer frame (2).

12. The telecommunication assembly according to any of the preceding claims, wherein the inner frame (4) comprises at least one wire guide element (27).

13. The telecommunication assembly according to any of the preceding claims, wherein the inner frame (4) comprises receptacles (33) for receiving fixing elements (26) of the termination modules (21).

14. The telecommunication assembly according to any of the preceding claims, wherein the inner frame (4) comprises openings (17) for receiving fixing and/or guiding elements (18) of the telecommunication component (24).

15. The telecommunication assembly according to any of the preceding claims, wherein the outer frame (2) comprises openings (13) for accommodating fixing elements (14) and/or guide rails (11) for accommodating guiding elements (12) of the inner frame (4).

16. The telecommunication assembly according to any of the preceding claims, wherein the outer frame (2) is fixed to mounting rails (3).
